# EUROPÄISCHE PATENTSCHRIFT

(11) **EP 2 350 676 B1**
(45) Veröffentlichungstag und Bekanntmachung des Hinweises auf die Patenterteilung: **18.03.2015**
(21) Anmeldenummer: 09756469.4
(22) Anmeldetag: 16.11.2009
(51) Int. Cl.: G01N 35/10

(54) **AUTOMATISIERTE ANALYSEVORRICHTUNG MIT EINER AUTOMATISCHEN PIPETTIERVORRICHTUNG UND MIT EINEM PIPETTIERARM MIT EINEM CRASH-SENSOR**
AUTOMATED ANALYTICAL DEVICE COMPRISING AN AUTOMATIC PIPETTING DEVICE AND A PIPETTING ARM HAVING A CRASH SENSOR
DISPOSITIF D'ANALYSE AUTOMATISÉ PRÉSENTANT UN DISPOSITIF AUTOMATIQUE DE PRÉLÈVEMENT PAR PIPETTE ET UN BRAS DE PRÉLÈVEMENT PAR PIPETTE MUNI D'UN DÉTECTEUR D'IMPACT

(30) Priorität: 18.11.2008 DE 102008058067
(43) Veröffentlichungstag der Anmeldung: 03.08.2011
(73) Patentinhaber: Diasys Technologies S.A.R.L., 34830 Clapiers (FR)
(72) Erfinder: SCHENK, Roland, 67281 Kirchheim (DE)
(74) Vertreter: WSL Patentanwälte Partnerschaft mbB
(86) Internationale Anmeldenummer: PCT/EP2009/065253
(87) Internationale Veröffentlichungsnummer: WO 2010/057862

(56) Entgegenhaltungen:
- WO-A1-97/00450
- US-A- 4 715 413
- US-A1- 2005 058 573
- US-A1- 2008 240 984
- US-B1- 6 298 282

## Beschreibung

Die vorliegende Erfindung betrifft eine automatische Pipettiervorrichtung mit einem Pipettierarm, wobei der Pipettierarm eine Befestigungsvorrichtung zum Befestigen des Pipettierarms an einer Bewegungsvorrichtung zum Bewegen des Pipettierarms in einem Arbeitsbereich, eine Aufnahmevorrichtung für eine im wesentlichen senkrecht zu dem Pipettierarm angeordnete Pipettiernadel und eine Detektionsvorrichtung zum Feststellen einer gegen das freie Ende der Pipettiernadel und entlang der Längsachse der Pipettiernadel wirkenden mechanischen Kraft umfaßt. Darüber hinaus betrifft die vorliegende Erfindung eine automatisierte Analysevorrichtung mit einer solchen Pipettiervorrichtung.

Im Rahmen der zunehmenden Automatisierung auf dem Gebiet der medizinischen und veterinärmedizinischen Diagnostik wurden u.a. Vorrichtungen für die automatisierte Analyse von Flüssigkeiten, sogenannte Analysatoren, entwickelt, die ein für die Durchführung einer Analyse erforderliches Reagenz aus einem Reagenzienbehälter entnehmen und mit einer Probe zum Zwecke der Durchführung der Analyse in einem Reaktionsgefäß vereinigen können. Hierfür weisen die Analysatoren häufig ein Karussell auf, in dem entweder Aufnahmebereiche für Reagenzienbehälter oder Aufnahmebereiche für Probenbehälter vorgesehen sind. In besonderen Analysatorenkarussells sind sowohl Aufnahmebereiche für Reagenzienbehälter als auch Aufnahmebereiche für Probenbehälter vorgesehen. Solche Karussells werden üblicherweise von einer in dem Analysator vorgesehenen Antriebsvorrichtung zur Ausführung einer Drehbewebung des Karussells angetrieben.

Die Entnahme von Reagenz bzw. Probe und das Überführen in ein Reaktionsgefäß wird meist von einer automatischen Pipettiervorrichtung vorgenommen. Eine solche automatische Pipettiervorrichtung umfasst oft einen Pipettierarm, an dem eine Pipettiernadel angeordnet ist, die mit einer Pumpeinheit verbunden ist, mit der eine Flüssigkeit in die Pipettiernadel aufgezogen und aus der Pipettiernadel auch wieder ausgestoßen werden kann. Ein solcher Pipettierarm ist üblicherweise so ausgestaltet, dass mit dem Pipettierarm die Pipettiernadel über einen Arbeitsbereich bewegt werden kann, in welchem Arbeitsbereich die Reagenzienbehälter, Probenbehälter und/oder Reaktionsgefäße (z. B. Küvetten) stationär angeordnet sind oder durch z. B. ein Karussell vorübergehend bereitgestellt werden.

Es gibt schwenkbare Pipettierarme, durch deren eines Ende eine Rotationsachse verläuft, um die sich das andere Ende des Pipettierarms auf einer Kreisbahn bewegen kann. Alternativ hierzu gibt es auch Pipettierarme, die sowohl in einer Richtung X als auch in einer senkrecht dazu angeordneten Richtung Y auf einer Ebene über dem Arbeitsbereich des Pipettierarms verfahrbar sind.

Pipettierarme können an Hubsäulen angeordnet sein, mit denen sie senkrecht zur Grundfläche des Arbeitsbereichs in der Arbeitshöhe verstellbar sind, um beispielsweise die Pipettiernadel über die in dem Arbeitsbereich angeordneten Flüssigkeitsbehälter bewegen zu können und die Pipettiernadel in ausgewählte Flüssigkeitsbehälter von oben einführen zu können. Alternativ zur Höhenverstellbarkeit über eine Hubsäule kann ein Pipettierarm auch so gestaltet sein, dass die Pipettiernadel selbst am Pipettierarm höhenverstellbar angeordnet ist.

Zwischen den einzelnen Pipettiervorgängen ist es regelmäßig erforderlich, die Pipettiernadel der automatischen Pipettiervorrichtung innen und außen zu reinigen. Hierfür wird die Pipettiernadel meist in eine Spülflüssigkeit eingetaucht, wobei eine bestimmte Menge an Spülflüssigkeit in die Pipettiernadel aufgezogen wird. Anschließend wird die Pipettiernadel aus der Spülflüssigkeit herausgezogen und über einem Abfallbehälter bzw. einem Abfluss entleert und abtropfen gelassen bzw. abgestreift.

Üblicherweise enthalten Analysatoren außerdem eine Messvorrichtung zum Bestimmen einer physikalischen oder chemischen Größe eines in einem Reaktionsgefäß angesetzten Reaktionsgemisches. Das Reaktionsgefäß kann z. B. eine Küvette sein, die im Strahlengang eines in dem Analysator angeordneten Photometers angeordnet ist oder eingebracht werden kann.

Darüber hinaus umfassen Analysatoren in der Regel wenigstens eine Steuerungseinheit zum Steuern der Bewegungen des Pipettierarms, der Pumpeinheit, der Pipettiernadel, der Hubsäule und/oder des Karussells, sowie eine Datenverarbeitungsvorrichtung zum Einrichten und Ausführen eines Analysenprogramms sowie zum Verarbeiten und Ausgeben einer gemessenen physikalischen oder chemischen Größe.

Die Öffnungen der Reagenzienbehälter bzw. Probenbehälter sowie die Öffnungen von Reaktionsgefäßen, aber auch die Öffnung einer gegebenenfalls vorgesehenen Pipettiernadelspülstation sind teilweise sehr klein ausgestaltet, so dass es vorkommen kann, dass bei einer Fehlfunktion der Steuerung die Pipettiernadel nicht wie vorgesehen in die Öffnung eines Behälters eingeführt wird, sondern auf den Behälterrand stößt oder möglicherweise sogar neben den Behälter und damit unter Umständen auf ein Bauteil des Analysators auftrifft. In diesen Fällen kann es zu einer Beschädigung der Pipettiernadel oder des Gegenstandes kommen, auf den die Pipettiernadel auftrifft. Solche Beschädigungen können so schwerwiegend sein, dass eine Fortführung des Analysendurchlaufs nicht mehr möglich ist.

Es besteht daher ein Bedarf nach einer Vorrichtung, die im Falle eines unerwünschten Auftreffens der Pipettiernadel auf einen im Analysator angeordneten Gegenstand ein Signal erzeugt, welches dazu führt, dass der Analysendurchlauf unmittelbar abgebrochen und/oder dem Betreiber des Analysators der Vorfall optisch oder akustisch signalisiert wird. Eine solche Vorrichtung wird im folgenden als Crash-Sensor bezeichnet.

Bei bisherigen Lösungen der der Erfindung zugrundeliegenden Aufgabe ist die Pipettiernadel in einer hülsenartigen Aufnahmevorrichtung gefedert gelagert. Bei einem Impuls gegen die Pipettiernadel nach oben wird die Feder zusammengeschoben, wobei ein Signal, dass den Impuls anzeigt, erzeugt wird. Die Führung der Pipettiernadel in der Hülse führt bei einem Impuls gegen die Pipettiernadel nach oben zu einer Reibung zwischen der Außenfläche der Pipettiernadel und der Innenfläche der Hülse. Außerdem kann es auch zu einem Verkanten der Pipettiernadel in der Hülse kommen. Da die Faktoren Reibung und Verkanten die Empfindlichkeit und Zuverlässigkeit des Systems beeinträchtigen, sind Crash-Sensoren dieser Art nachteilbehaftet.

WO97/00450 beschreibt eine automatische Pipettiervörrichtung mit einem beweglichen Arm und einer Detektionsvorrichtung zum Detektieren der Einwirkung einer kraft gegen das freie Ende der Pipettiernadel. Der Pipettierarm ist dabei mehrteilig ausgeführt, und zwar mit einem feststehenden unteren Teil, auf welchem ein beweglicher oberer Teil aufliegt. Bei der Einwirkung einer kraft wird die Pipettiernadel aufgrund dieser Kraft nach oben bewegt, dabei kippt die Nadel jedoch seitlich.

US2005/0058573 beschreibt einen Pipettierarm welcher an einem Gelenk gelagert ist und bei einer Krafteinwirkung nach oben gekippt wird. Auch bei dieser Vorrichtung wird die Pipettiernadel nicht parallel verschoben, da es sich bei der Konstruktion des Armes um einen einzigen Teil handelt, welcher ein paralleles verschieben der Nadel nach oben nicht zulässt.

Die gefederte Lagerung der Pipettiernadelaufnahme bringt zudem beim Austausch der Pipettiernadel häufig Schwierigkeiten mit sich. Insbesondere ist es hier nach jedem Einsetzen einer neuen Pipettiernadel erforderlich, eine aufwendige Feinjustierung zum Zwecke der Ausrichtung der Pipettiernadelspitze vorzunehmen. Die aufwendige Feinjustierung, wie z. B. bei einem Crash-Sensor mit gefedert gelagerter Pipettiernadel, soll bei einem Crash-Sensor gemäß der vorliegenden Erfindung nicht erforderlich sein.

Es ist daher die Aufgabe der vorliegenden Erfindung einen solchen Crash-Sensor bereitzustellen, der möglichst platzsparend im Pipettierarm angeordnet ist und der so gestaltet ist, dass das Einsetzen einer Pipettiernadel in die hierfür an dem Pipettierarm vorgesehene Aufnahmevorrichtung, beispielsweise beim Austausch einer defekten Pipettiernadel, möglichst einfach und auch vom Anwender der automatischen Pipettiervorrichtung selbst vorgenommen werden kann. Darüber hinaus soll vermieden werden, daß es im Falle eines Crashs zu Reibungskräften oder gar zu einem Verkanten der sich bewegenden Teile kommt, um die Empfindlichkeit und Zuverlässigkeit des Crash-Sensors zu verbessern.

Diese Aufgabe wird gelöst durch eine automatische Pipettiervorrichtung der eingangs genannten Art, die zustätzlich dadurch gekennzeichnet ist, dass der Pipettierarm aus wenigstens vier Teilkörpern besteht, die über gelenkartige Verbindungen miteinander verbunden sind, wobei
a) ein Teilkörper eine Pipettierarmbasis ist, an der die Befestigungsvorrichtung angeordnet ist,
b) ein Teilkörper ein Pipettierarmendstück ist, an dem die Aufnahmevorrichtung angeordnet ist,
c) ein Teilkörper ein Pipettierarmunterteil ist und
d) ein Teilkörper ein Pipettierarmoberteil ist,
wobei das Pipettierarmunterteil und das Pipettierarmoberteil übereinander und zwischen der Pipettierarmbasis und dem Pipettierarmendstück angeordnet sind, wobei das Pipettierarmunterteil und das Pipettierarmoberteil über gelenkartige Verbindungen so mit der Pipettierarmbasis und dem Pipettierarmendstück verbunden sind, dass eine gegen das freie Ende der Pipettiernadel und entlang der Längsachse der Pipettiernadel wirkende mechanische Kraft, zu einer Bewegung des Pipettierarmendstücks gegenüber der Pipettierarmbasis nach oben führt, und wobei die Detektionsvorrichtung dazu geeignet ist, eine Bewegung des Pipettierarmendstücks gegenüber der Pipettierarmbasis nach oben festzustellen.

Wenn im Zusammenhang mit der vorliegenden Erfindung die Bezeichnung "oben" oder "nach oben" verwendet wird, so ist dies so zu verstehen, daß "oben" die Richtung bezeichnet, die der Richtung, in die die Pipettiernadelspitze weist, entgegengesetzt ist.

Der Aufbau des Pipettierarms hat den Vorteil, dass die Aufnahmevorrichtung für die Pipettiernadel so gestaltet werden kann, dass ein einfacher Austausch der Pipettiernadel möglich ist, indem beispielsweise die Pipettiernadel in die Aufnahmevorrichtung einfach eingesteckt oder eingeschraubt wird, ohne dass eine aufwendige Nachjustage, wie z.B. im Falle einer gefedert gelagerten Pipettiernadelaufnahme, erforderlich ist.

Darüber hinaus treten bei der Bewegung des Pipettierarmendstücks gegenüber der Pipettierarmbasis nach oben keine störenden Reibungskräfte auf. Außerdem kann es bei dem Pipettierarm der vorliegenden Erfindung nicht zu einem unverwünschten Verkanten der sich beim Bewegen des Pipettierarmendstücks gegenüber der Pipettierarmbasis nach oben bewegenden Teile kommen.

Unter einer gelenkartigen Verbidung im Sinne der vorliegenden Erfindung ist jede dem Fachmann bekannte gelenkartige Verbindung, die ein Verschwenken des Pipettierarmoberteils gegenüber dem Pipettierarmunterteil nach oben ermöglicht, zu verstehen. Unter einer solchen gelenkartigen Verbindung ist u.a. auch eine Sollknickstelle zu verstehen, entlang der das Pipettierarmoberteil gegenüber dem Pipettierarmunterteil nach oben verschwenkt wird, wenn eine ausreichend große Kraft entlang der Achse, auf der die Pipettiernadel angeordnet ist, nach oben wirkt.

Vorzugsweise sind die wenigstens vier Teilkörper des Pipettierarms Teilkörper eines einstückigen, aus einem Material gefertigten Pipettierarmkörpers, wobei die gelenkartigen Verbindungen zwischen den Teilkörpern in dem Material vorgesehene Ausparungen in Form von Filmscharnieren sind. Vorzugsweise ist der einstückige, aus einem Material gefertigte Pipettierarmkörper im Strangpressverfahren oder Stranggußverfahren erzeugt.

Vorzugsweise besteht die Detektionsvorrichtung zum Feststellen einer Bewegung des Pipettierarmendstücks nach oben aus einer Lichtschranke, die so angeordnet und konfiguriert ist, dass bei einer Bewegung des Pipettierarmendstücks gegenüber der Pipettierarmbasis nach oben ein Signal erzeugt wird.

Der Begriff "Signal" ist in diesem Zusammenhang breit zu verstehen und soll u.a. ein optisches, ein akustisches und/oder ein elektrisches Signal zum Abstoppen des Pipettiervorgangs umfassen.

Alternativ kann zwischen den Teilkörpern des Pipettierarms auch ein elektrischer Kontakt ausgebildet sein, der bei einer Bewegung des Pipettierarmendstücks gegenüber der Pipettierarmbasis nach oben unterbrochen wird, wodurch ein Signal erzeugt wird. Andererseits kann der Pipettierarm auch so gestaltet sein, daß ein solcher elektrischer Kontakt bei einer Bewegung des Pipettierarmendstücks gegenüber der Pipettierarmbasis nach oben erst ausgebildet wird.

Bei einer bevorzugten Ausführungsform mit Lichtschranke ist diese so an dem Pipettierarmendstück angeordnet, daß bei einer Bewegung des Pipettierarmendstücks gegenüber der Pipettierarmbasis nach oben ein am Pipettierarmoberteil oder ein an der Pipettierarmbasis vorgesehener Vorsprung den Strahl der Lichtschranke verdeckt, wobei ein Signal erzeugt wird.

Der Vorteil bei dieser Anordnung ist, dass der Strahl üblicherweise nur im Falle eines Crashs verdeckt wird. Ein Falsch-Signal durch eine lediglich defekte Lichtschranke kann dadurch ausgeschlossen werden kann. Beispielsweise könnte "kein Strahl" auch bedeuten, dass lediglich die Sender-LED der Lichtschranke beschädigt ist.

Vorzugsweise ist die Aufnahmevorrichtung eine Hülse, in die die Pipettiernadel eingesteckt oder eingeschraubt werden kann, ohne dass danach noch aufwendige und üblicherweise nur vom Fachmann ausführbare Feinjustierungen vorgenommen werden müssen.

Eine bevorzugte Ausführungsform der Erfindung ist dadurch gekennzeichnet, dass im Pipettierarmunterteil ein Stift vorgesehen ist, der in dem Pipettierarmunterteil fixiert ist und die Oberseite des Pipettierarmunterteils überragt und in eine Ausnehmung im Pipettierarmoberteil eingreift. In dieser Ausnehmung liegt der Stift in Richtung Pipettierarmendstück an einer Anschlagfläche an. In Richtung der Pipettierarmbasis hat der Stift in der Ausnehmung etwas Spiel. Außerdem hat der Stift in der Ausnehmung auch nach oben etwas Spiel.

Der Stift schränkt die möglichen Bewegungen der Teilkörper gegeneinander ein. Im Ruhezustand verhindert er, dass stabilisiert er den Pipettierarm in einer waagerechten Position und verhindert damit, daß das Pipettierarmendstück mit der Pipettiernadel nach unten sinkt. Bei einer Bewegung des Pipettierarmendstücks nach oben kann der Stift in der Ausnehmung nur so weit nach oben und nur soweit in Richtung Pipettierarmbasis gleiten, wie Spiel in der Ausnehmung vorgesehen ist.

Vorzugsweise ist zwischen dem Pipettierarmoberteil und der Pipettierarmbasis eine Zugfeder angeordnet, welche zwischen der Pipettierarmbasis und dem Pipettierarmoberteil eine Vorspannung erzeugt, die einer Bewegung des Pipettierarmendstücks entgegen wirkt.

Bei einer alternativen Ausführungsform ist an der Unterseite der Pipettierarmbasis eine in Richtung Pipettierarmendstück überstehende Platte angebracht, die das Pipettierarmunterteil in einer waagerechten Position stabilisiert und verhindert, daß das Pipettierarmendstück mit der Pipettiernadel nach unten sinkt.

Wie eingangs bereits erwähnt weist die erfindungsgemäße Vorrichtung mit dem beschriebenen Flüssigkeitsbehälterkarussell eines oder mehrere Elemente unter einer Antriebsvorrichtung für das Karussell, einer Pipettiervorrichtung, einer Spülstation, einer wärmeerzeugenden Vorrichtung, einer kälteerzeugenden Vorrichtung, einer optischen Messvorrichtung zum Bestimmen einer physikalischen oder chemischen Größe des Reaktionsgemisches und einer optoelektronischen Lesevorrichtung zum Lesen eines optoelektronisch lesbaren Codes, der an dem oder an den Karussells und/oder auf den Proben- und/oder Reagenzien angebracht ist.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Weitere Merkmale oder Merkmalsgruppen sowie Beispiele für mögliche denkbare Merkmalskombinationen werden anhand der folgenden Beschreibung der beiliegenden Figuren offenbart bzw. veranschaulicht.

Hierbei zeigen:
- Figur 1: eine Vorrichtung für die automatisierte Analyse von Flüssigkeiten (Analysator) mit einer automatischen Pipettiervorrichtung mit einem Pipettierarm gemäß der vorliegenden Erfindung,
- Figur 2: eine Darstellung des Pipettierarms der automatischen Pipettiervorrichtung im Sinne der vorliegenden Erfindung im Ausgangszustand und
- Figur 3: eine Darstellung des Pipettierarms der automatischen Pipettiervorrichtung im Sinne der vorliegenden Erfindung bei einem Crash.

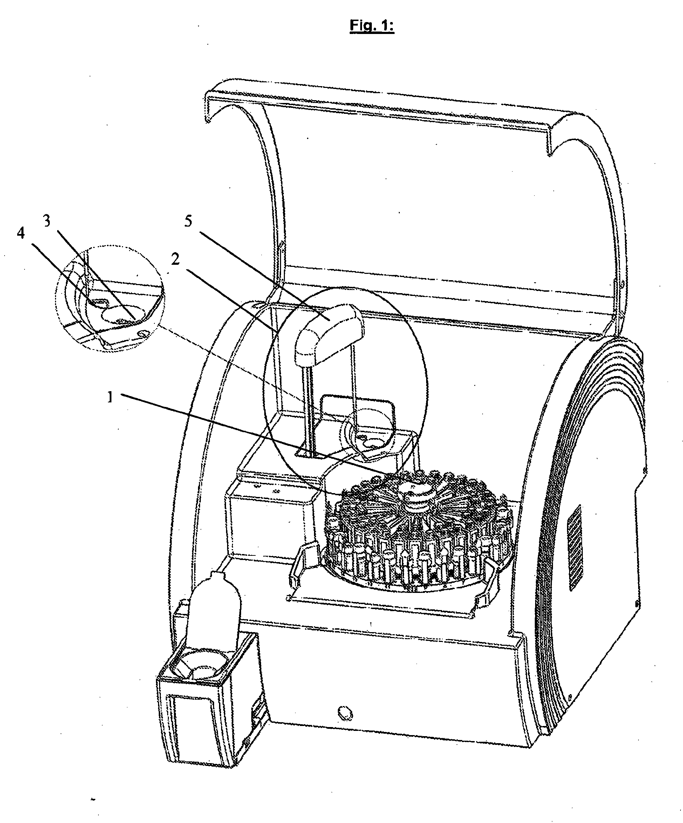

In Figur 1 ist eine Vorrichtung für die automatisierte Analyse von Flüssigkeiten (Analysator) dargestellt, die ein Karussell 1 für Flüssigkeitsbehälter und eine Pipettiervorrichtung 2 mit einem Pipettierarm 5 aufweist. Das Karussell 1 ist so angeordnet, dass es die Flüssigkeitsbehälter in den Arbeitsbereich des Pipettierarms 5 bewegen kann. Darüber hinaus ist im Arbeitsbereich des Pipettierarms 5 auch eine Spülstation 3 sowie eine Messvorrichtung 4 zum Bestimmen der exakten Position der Pipettiernadelspitze vorgesehen.

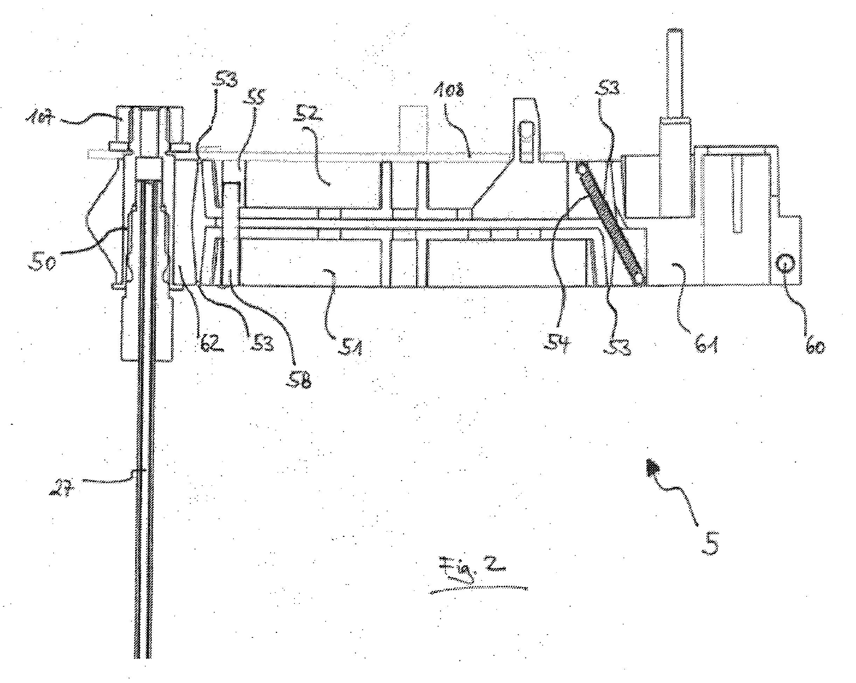

Figur 2 zeigt einen Pipettierarm 5 einer erfindungsgemäßen automatischen Pipettiervorrichtung. Der Pipettierarm 5 umfaßt einen einstückigen Pipettierarmkörper aus vier miteinander über Filmscharniere verbundenen Teilkörpern 51, 52, 61, 62. Der gesamte Pipettierarmkörper, bestehend aus den vier Teilkörpern 51, 52, 61, 62 und den dazugehörigen Filmscharnieren, besteht aus einem Material.

An der Pipettierarmbasis 61 ist die Befestigungsvorrichtung 60 zum Befestigen des Pipettierarms 5 an einer Bewegungsvorrichtung zum Bewegen des Pipettierarms in einem Arbeitsbereich angeordnet. An dem Pipettierarmendstück 62 ist die Aufnahmevorrichtung 50 angeordnet.

Das Pipettierarmunterteil 51 und das Pipettierarmoberteil 52 sind übereinander und zwischen der Pipettierarmbasis 61 und dem Pipettierarmendstück 62 angeordnet. Dabei sind das Pipettierarmunterteil 51 und das Pipettierarmoberteil 52 über Filmscharnierem 53 mit der Pipettierarmbasis 61 und dem Pipettierarmendstück 62 verbunden. Dadurch kann eine gegen das freie Ende der Pipettiernadel 27 und entlang der Längsachse der Pipettiernadel 27 wirkende mechanische Kraft zu einer Bewegung des Pipettierarmendstücks 62 gegenüber der Pipettierarmbasis 61 nach oben führt, wobei die Teilkörper 51, 52, 61, 62 um die Filmscharniere 53 entsprechend verschwenkt werden.

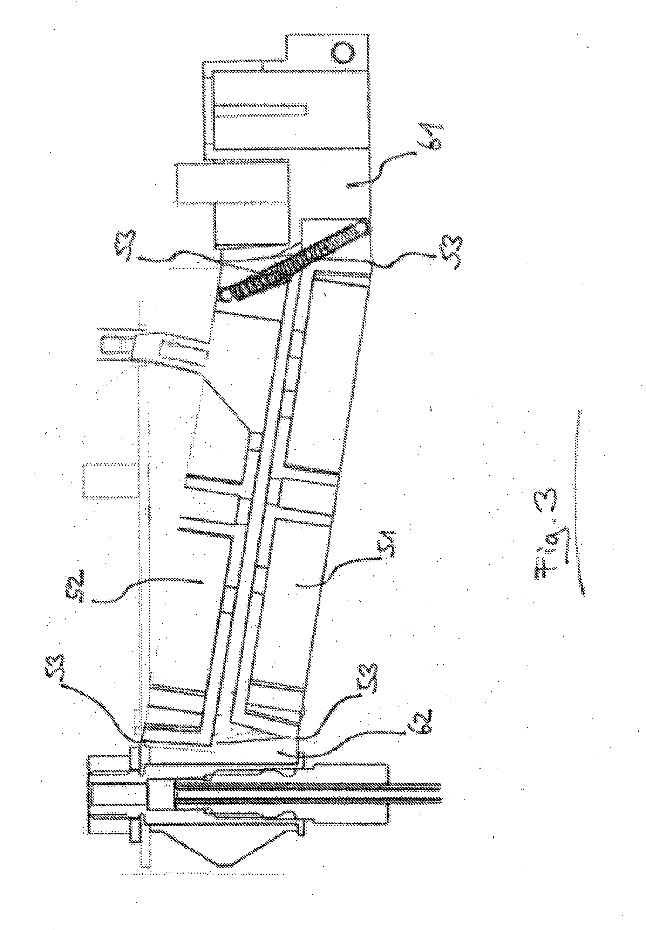

In Figur 3 ist der Pipettierarm aus Figur 2 bei einem Crash dargestellt.

### Bezugszeichen

- 1: Karussell für Flüssigkeitsbehälter
- 2: Pipettiervorrichtung
- 3: Spülstation
- 4: Messvorrichtung zum Bestimmen der horizontalen Position der Pipettiernadelspitze
- 5: Pipettierarm

- 27: Pipettiernadel

- 50: Aufnahmevorrichtung für Pipettiernadel
- 51: Pipettierarmunterteil
- 52: Pipettierarmoberteil
- 53: gelenkartige Verbindung
- 54: Zugfeder
- 55: Ausnehmung
- 56: Anschlagfläche
- 57: Lichtschranke
- 58: Stift
- 59: Rotationsachse

- 60: Befestigungsvorrichtung zum Befestigen des Pipettierarms
- 61: Pipettierarmbasis
- 62: Pipettierarmendstück

- 107: Fixiermutter
- 108: Leiterplatine

## Patentansprüche

1. Automatische Pipettiervorrichtung (2) mit einem Pipettierarm (5), wobei der Pipettierarm (5) eine Befestigungsvorrichtung (60) zum Befestigen des Pipettierarms (5) an einer Bewegungsvorrichtung zum Bewegen des Pipettierarms in einem Arbeitsbereich, eine Aufnahmevorrichtung (50) für eine im wesentlichen senkrecht zu dem Pipettierarm (5) angeordnete Pipettiernadel (27) und eine Detektionsvorrichtung (57) zum Feststellen einer gegen das freie Ende der Pipettiernadel (27) und entlang der Längsachse der Pipettiernadel (27) wirkenden mechanischen Kraft umfaßt, **dadurch gekennzeichnet, dass** der Pipettierarm (5) aus wenigstens vier Teilkörpern (51, 52, 61, 62) besteht, die über gelenkartige Verbindungen miteinander verbunden sind, wobei
a) ein Teilkörper eine Pipettierarmbasis (61) ist, an der die Befestigungsvorrichtung (60) angeordnet ist,
b) ein Teilkörper ein Pipettierarmendstück (62) ist, an dem die Aufnahmevorrichtung (50) angeordnet ist,
c) ein Teilkörper ein Pipettierarmunterteil (51) ist und
d) ein Teilkörper ein Pipettierarmoberteil (52) ist,
wobei das Pipettierarmunterteil (51) und das Pipettierarmoberteil (52) übereinander und zwischen der Pipettierarmbasis (61) und dem Pipettierarmendstück (62) angeordnet sind, wobei das Pipettierarmunterteil (51) und das Pipettierarmoberteil (52) über gelenkartige Verbindungen (53) so mit der Pipettierarmbasis (61) und dem Pipettierarmendstück (62) verbunden sind, dass eine gegen das freie Ende der Pipettiernadel (27) und entlang der Längsachse der Pipettiernadel (27) wirkende mechanische Kraft, zu einer Bewegung des Pipettierarmendstücks (62) gegenüber der Pipettierarmbasis (61) nach oben führt, und wobei die Detektionsvorrichtung (57) dazu geeignet ist, eine Bewegung des Pipettierarmendstücks (62) gegenüber der Pipettierarmbasis (61) nach oben festzustellen.

2. Pipettiervorrichtung (2) nach Anspruch 1, **dadurch gekennzeichnet, dass** die wenigstens vier Teilkörper (51, 52, 61, 62) des Pipettierarms (5) Teilkörper eines einstückigen Pipettierarmkörpers sind, wobei die gelenkartigen Verbindungen (53) zwischen den Teilkörpern (51, 52, 61, 62) Filmscharniere sind.

3. Pipettiervorrichtung (2) nach einem der Ansprüche 1 und 2, **dadurch gekennzeichnet, dass** die Detektionsvorrichtung aus einer Lichtschranke (57) besteht, die so angeordnet und konfiguriert ist, dass bei einer Bewegung des Pipettierarmendstücks (62) gegenüber der Pipettierarmbasis (61) nach oben ein Signal erzeugt wird.

4. Pipettiervorrichtung (2) nach einem der Ansprüche 1 bis 3, **dadurch gekennzeichnet, dass** die Lichtschranke (57) so an dem Pipettierarmendstück (62) angeordnet ist, daß bei einer Bewegung des Pipettierarmendstücks (62) gegenüber der Pipettierarmbasis (61) nach oben ein am Pipettierarmoberteil (52) oder ein an der Pipettierarmbasis (61) vorgesehener Vorsprung (56) den Strahl der Lichtschranke (57) verdeckt, wobei ein Signal erzeugt wird.

5. Pipettiervorrichtung (2) nach einem der Ansprüche 1 bis 4, **dadurch gekennzeichnet, dass** zwischen der Pipettierarmbasis (61) und dem Pipettierarmoberteil (52) eine Zugfeder (54) angeordnet ist, welche zwischen der Pipettierarmbasis (61) und dem Pipettierarmoberteil (52) eine Vorspannung erzeugt, die einer Bewegung des Pipettierarmendstücks (62) entgegen wirkt.

6. Pipettiervorrichtung (2) nach einem der Ansprüche 1 bis 5, **dadurch gekennzeichnet, dass** die Aufnahmevorrichtung (50) eine Hülse ist, in die die Pipettiernadel (27) eingesteckt oder eingeschraubt werden kann.

7. Pipettiervorrichtung (2) nach einem der Ansprüche 1 bis 6, **dadurch gekennzeichnet, dass** im Pipettierarmunterteil (51) ein Stift (58) vorgesehen ist, der bei einer Bewegung des Pipettierarmendstücks (62) nach oben mit einer Anschlagfläche (56) in einer Ausnehmung (55) im Pipettierarmoberteil (52) in Kontakt tritt.

8. Pipettiervorrichtung (2) nach einem der Ansprüche 1 bis 6, **dadurch gekennzeichnet, dass** im Pipettierarmoberteil (51) ein Stift (58) vorgesehen ist, der bei einer Bewegung des Pipettierarmendstücks (62) nach oben mit einer Anschlagfläche (56) in einer Ausnehmung (55) im Pipettierarmunterteil (52) in Kontakt tritt.

9. Automatisierte Analysevorrichtung mit einer Pipettiervorrichtung (2) nach einem der Ansprüche 1 bis 7, wobei die automatisierte Analysevorrichtung zusätzlich ein oder mehrere Elemente unter einem Analyserotor, einer Wärme erzeugenden Vorrichtung, einer Kälte erzeugenden Vorrichtung, einer Spülstation zum Spülen der Pipettiernadel, einer optischen Messvorrichtung und einer optoelektronischen Lesevorrichtung zum Lesen eines optoelektronisch lesbaren Codes aufweist.

## Claims

1. Automatic pipetting device (2) with a pipetting arm (5), wherein the pipetting arm (5) comprises a fastening device (60) for fastening the pipetting arm (5) on a motion device for moving the pipetting arm in a working zone, a receiving device (50) for a pipetting needle (27) arranged essentially perpendicularly to the pipetting arm (5) and a detection device (57) for detecting a mechanical force acting against the free end of the pipetting needle (27) and along the longitudinal axis of the pipetting needle (27), **characterized in that** the pipetting arm (5) consists of at least four parts (51, 52, 61, 62), which are connected together by articulated joints, wherein
a) one part is a pipetting arm base (61), on which the fastening device (60) is arranged,
b) one part is a pipetting arm end piece (62), on which the receiving device (50) is arranged,
c) one part is a pipetting arm bottom (51) and
d) one part is a pipetting arm top (52),
wherein the pipetting arm bottom (51) and the pipetting arm top (52) are arranged one above the other and between the pipetting arm base (61) and the pipetting arm end piece (62), wherein the pipetting arm bottom (51) and the pipetting arm top (52) are connected by articulated joints (53) to the pipetting arm base (61) and the pipetting arm end piece (62) in such a way that a mechanical force acting against the free end of the pipetting needle (27) and along the longitudinal axis of the pipetting needle (27) leads to an upward movement of the pipetting arm end piece (62) relative to the pipetting arm base (61), and wherein the detection device (57) is suitable for detecting an upward movement of the pipetting arm end piece (62) relative to the pipetting arm base (61).

2. Pipetting device (2) according to claim 1, **characterized in that** the at least four parts (51, 52, 61, 62) of the pipetting arm (5) are parts of a one-piece pipetting arm body, wherein the articulated joints (53) are film hinges between the parts (51, 52, 61, 62).

3. Pipetting device (2) according to one of claims 1 and 2, **characterized in that** the detection device consists of a light barrier (57), which is arranged and configured so that if there is an upward movement of the pipetting arm end piece (62) relative to the pipetting arm base (61) a signal is produced.

4. Pipetting device (2) according to one of claims 1 to 3, **characterized in that** the light barrier (57) is arranged on the pipetting arm end piece (62) in such a way that if there is an upward movement of the pipetting arm end piece (62) relative to the pipetting arm base (61), a projection (56) provided on the pipetting arm top (52) or on the pipetting arm base (61) blocks the beam of the light barrier (57), wherein a signal is produced.

5. Pipetting device (2) according to one of claims 1 to 4, **characterized in that** a tension spring (54) is arranged between the pipetting arm base (61) and the pipetting arm top (52), which produces an initial tension between the pipetting arm base (61) and the pipetting arm top (52), which counteracts a movement of the pipetting arm end piece (62).

6. Pipetting device (2) according to one of claims 1 to 5, **characterized in that** the receiving device (50) is a sleeve, into which the pipetting needle (27) can be inserted or screwed.

7. Pipetting device (2) according to one of claims 1 to 6, **characterized in that** a pin (58), which comes into contact with a stop surface (56) in a recess (55) in the pipetting arm top (52) if there is an upward movement of the pipetting arm end piece (62), is provided in the pipetting arm bottom (51).

8. Pipetting device (2) according to one of claims 1 to 6, **characterized in that** a pin (58), which comes into contact with a stop surface (56) in a recess (55) in the pipetting arm bottom (52) if there is an upward movement of the pipetting arm end piece (62), is provided in the pipetting arm top (51).

9. Automated analysis device with a pipetting device (2) according to one of claims 1 to 7, wherein the automated analysis device additionally has one or more of the following elements: an analysis rotor, a device producing heat, a device producing cold, a rinsing station for rinsing the pipetting needle, an optical measuring device and an optoelectronic reading device for reading an optoelectronically readable code.

## Revendications

1. Dispositif automatique de prélèvement par pipette (2) pourvu d'un bras de prélèvement par pipette (5), dans lequel le bras de prélèvement par pipette (5) comprend un dispositif de fixation (60) destiné à fixer le bras de prélèvement par pipette (5) sur un dispositif de déplacement permettant le mouvement du bras de prélèvement par pipette dans une zone de travail, un dispositif de réception (50) destiné à recevoir une aiguille de prélèvement par pipette (27) disposée de manière sensiblement perpendiculaire au bras de prélèvement par pipette (5) et un dispositif de détection (57) destiné à déterminer une force mécanique agissant à l'encontre de l'extrémité libre de l'aiguille de prélèvement par pipette (27) et le long de l'axe longitudinal de l'aiguille de prélèvement par pipette (27), **caractérisé en ce que** le bras de prélèvement par pipette (5) est constitué d'au moins quatre corps partiels (51, 52, 61, 62) reliés entre eux par des assemblages de type articulé,
a) un corps partiel étant une base de bras de prélèvement par pipette (61) sur laquelle est disposé le dispositif de fixation (60),
b) un corps partiel étant un embout de bras de prélèvement par pipette (62) sur lequel est disposé le dispositif de réception (50),
c) un corps partiel étant une partie inférieure de bras de prélèvement par pipette (51), et
d) un corps partiel étant une partie supérieure de bras de prélèvement par pipette (52),
la partie inférieure de bras de prélèvement par pipette (51) et la partie supérieure de bras de prélèvement par pipette (52) étant disposées l'une sur l'autre et placées entre la base de bras de prélèvement par pipette (61) et l'embout de bras de prélèvement par pipette (62), la partie inférieure de bras de prélèvement par pipette (51) et la partie supérieure de bras de prélèvement par pipette (52) étant reliées à la base de bras de prélèvement par pipette (61) et à l'embout de bras de prélèvement par pipette (62) par des assemblages de type articulé (53) de façon telle qu'une force mécanique agissant à l'encontre de l'extrémité libre de l'aiguille de prélèvement par pipette (27) et le long de l'axe longitudinal de l'aiguille de prélèvement par pipette (27) induit un déplacement vers le haut de l'embout de bras de prélèvement par pipette (62) par rapport à la base de bras de prélèvement par pipette (61), et le dispositif de détection (57) étant apte à déterminer un déplacement vers le haut de l'embout de bras de prélèvement par pipette (62) par rapport à la base de bras de prélèvement par pipette (61).

2. Dispositif de prélèvement par pipette (2) selon la revendication 1, **caractérisé en ce que** les corps partiels (51, 52, 61, 62) du bras de prélèvement par pipette (5), au moins au nombre de quatre, sont des corps partiels d'un corps de bras de prélèvement par pipette monobloc, les assemblages de type articulé (53) entre les corps partiels (51, 52, 61, 62) étant des film-charnières.

3. Dispositif de prélèvement par pipette (2) selon l'une des revendications 1 et 2, **caractérisé en ce que** le dispositif de détection est constitué d'une barrière lumineuse (57) qui est disposée et configurée de façon telle qu'un signal est émis lors d'un déplacement vers le haut de l'embout de bras de prélèvement par pipette (62) par rapport à la base de bras de prélèvement par pipette (61).

4. Dispositif de prélèvement par pipette (2) selon l'une des revendications 1 à 3, **caractérisé en ce que** la barrière lumineuse (57) est disposée sur l'embout de bras de prélèvement par pipette (62) de façon telle que, lors d'un déplacement vers le haut de l'embout de bras de prélèvement par pipette (62) par rapport à la base de bras de prélèvement par pipette (61), une saillie (56) prévue sur la partie supérieure de bras de prélèvement par pipette (52) ou prévue sur la base de bras de prélèvement par pipette (61) occulte le faisceau de la barrière lumineuse (57), suite à quoi un signal est émis.

5. Dispositif de prélèvement par pipette (2) selon l'une des revendications 1 à 4, **caractérisé en ce qu'**entre la base de bras de prélèvement par pipette (61) et la partie supérieure de bras de prélèvement par pipette (52) est disposé un ressort de traction (54) qui génère, entre la base de bras de prélèvement par pipette (61) et la partie supérieure de bras de prélèvement par pipette (52), une précontrainte qui s'oppose à un mouvement de l'embout de bras de prélèvement par pipette (62).

6. Dispositif de prélèvement par pipette (2) selon l'une des revendications 1 à 5, **caractérisé en ce que** le dispositif de réception (50) est une douille dans laquelle peut être enfichée ou vissée l'aiguille de prélèvement par pipette (27).

7. Dispositif de prélèvement par pipette (2) selon l'une des revendications 1 à 6, **caractérisé en ce qu'**est prévue dans la partie inférieure de bras de prélèvement par pipette (51) une tige (58) qui, lors d'un déplacement vers le haut de l'embout de bras de prélèvement par pipette (62), vient en contact avec une surface de butée (56) dans un évidement (55) ménagé dans la partie supérieure de bras de prélèvement par pipette (52).

8. Dispositif de prélèvement par pipette (2) selon l'une des revendications 1 à 6, **caractérisé en ce qu'**est prévue dans la partie supérieure de bras de prélèvement par pipette (51) une tige (58) qui, lors d'un déplacement vers le haut de l'embout de bras de prélèvement par pipette (62), vient en contact avec une surface de butée (56) dans un évidement (55) ménagé dans la partie inférieure de bras de prélèvement par pipette (52).

9. Dispositif d'analyse automatisé pourvu d'un dispositif de prélèvement par pipette (2) selon l'une des revendications 1 à 7, le dispositif d'analyse automatisé comportant en outre un ou plusieurs éléments parmi un rotor d'analyse, un dispositif générateur de chaleur, un dispositif de réfrigération, un poste de rinçage pour le rinçage de l'aiguille de prélèvement par pipette, un dispositif de mesure optique et un dispositif de lecture optoélectronique destiné à la lecture d'un code lisible par voie optoélectronique.
